Europäisches Patentamt

European Patent Office

Office européen des brevets

(11) Publication number: **0 232 005**
**A2**

## (12) EUROPEAN PATENT APPLICATION

(21) Application number: **87300116.8**

(22) Date of filing: **08.01.87**

(51) Int. Cl.⁴: **G 06 F 15/72**

(30) Priority: **21.01.86 US 821098**

(43) Date of publication of application:
**12.08.87 Bulletin 87/33**

(84) Designated Contracting States: **DE FR GB IT**

(71) Applicant: **International Business Machines Corporation**
**Old Orchard Road**
**Armonk, N.Y. 10504 (US)**

(72) Inventor: **Haskell, Kirk Steffen**
**8 Smoke Rise Lane**
**Wappingers Falls New York 12590 (US)**

**Liang, Bob Chao-Chu**
**Box 522, Ryan Drive**
**West Hurley New York 12491 (US)**

(74) Representative: **Grant, Iain Murray**
**IBM United Kingdom Limited Intellectual Property**
**Department Hursley Park**
**Winchester Hampshire SO21 2JN (GB)**

(54) Curve drawing in a graphics display system.

(57) Curve drawing in a graphics display system, whether open or closed figures are involved, under transformation, clipping, or mapping, includes testing to determine whether transformation is to be performed; transforming parametric equations for the figure to be transformed and drawn; testing to determine whether the figure to be drawn is to be clipped against predetermined clipping boundaries; computing an extent of the figure to be drawn; applying a box clip test for trivial clipping for the entire figure; rejecting those figures which are entirely outside the viewport as determined by the trivial clipping test; accepting the entire figure to be drawn which has been determined to be completely within the clipping box; mapping the parametric equations if mapping is required; generating line segments for the figure to be drawn.

Fig. 1. A Raster Graphics System

**Description**

## CURVE DRAWING IN A GRAPHICS DISPLAY SYSTEM

The present invention relates to curve drawing in a graphics display system.

The following are systems representative of the prior art.

U.S. Patent 3,721,810 deals with the generation of conic sections in a graphics display. The generation of line segments approximating conic curves is handled by employing slope information of points along the curve.

Although the patent deals generally with generation of curved figures, the patent does not address the complete problem dealt with by the present invention. The patent does not specifically handle transformation and clipping of an equation for a curved figure as does the method according to the present invention.

U.S. Patent 4,371,933 employs the Bresenham algorithm or Table Lookup Method to generate individual line segments making up a circular arc, which is then transformed line segment by line segment, clipped and then mapped to the display.

The method of the patent requires that each individual line segment be individually transformed and clipped thus slowing the process considerably. The patent does not show a method for transformation, clipping and mapping of the equation rather than individual line segments as is claimed by the present invention.

U.S. Patent 4,550,438 deals with data compression for data storage of the representation of an arc by three points of an arc or by two angles of the arc but does not deal with the transformation and clipping of a curved figure as does the method according to the present invention.

The present invention provides a method for drawing a curve or a curved figure on a display device under potential transformation, clipping, or mapping, comprising the steps of:

testing to determine whether transformation is to be performed;

transforming parametric equations for the figure to be transformed and drawn;

testing to determine whether the figure to be drawn is to be clipped against one or more clipping boundaries;

computing an extent of the figure to be drawn;

mapping the parametric equations if mapping is required;

generating line segments for the figure to be drawn.

It may further comprise the steps of:

applying a box clip test for trivial clipping for the entire figure;

rejecting those figures which are entirely outside the viewport as determined by the trivial clipping test;

accepting the entire figure to be drawn which has been determined to be completely within the clipping box.

In an embodiment of the present invention disclosed hereinafter, a curved figure defined by parametric equations for dispaly on a graphics display system under transformation, clipping and mapping transforms the parametric equations for the figure, if required as determined by testing; computes an extent of the figure to be drawn if the figure is to be clipped against predetermined clipping boundaries as dtermined by testing and mapping the parametric equations if mapping is determined to be required by testing and, thereafter, the line segments for the figure to be drawn are generated.

Clipping and mapping includes applying a box clip test for trivial clipping for the entire figure, rejecting figures which are entirely outside the clipping boundaries as determined by the trivial clip test, accepting the entire figure to be drawn which has been determined to be completely within the clipping box. Thus there is disclosed a method for drawing a curved figure on a graphics display system under transformation, clipping and mapping by a method which includes the steps of testing to determine whether transformation is to be performed; transforming parametric equations for the figure to be transformed and drawn; testing to determine whether the figure to be drawn is to be clipped against predetermined clipping boundaries; computing an extent of the figure to be drawn; applying a box clip test for trivial clipping for the entire figure; rejecting those figures which are entirely outside the viewport as determined by the trivial clipping test; accepting the entire figure to be drawn which has been determined to be completely within the clipping box; mapping the parametric equations if mapping is required; and generating line segments for the figure to be drawn. The present invention will be described further by way of example with reference to embodiments of the invention, as illustrated in the accompanying drawings, in which:-

Fig. 1 is a block diagram of a raster graphic system;

Fig. 2 is a diagram of the display processor portion of the raster graphic system shown in Fig. 1;

Fig. 3 is a block diagram of logical data flow for the graphics system shown in Fig. 1; and

Fig. 4, in sections 4a and 4b, is a flow diagram of a preferred embodiment of a method for drawing a curved figure under transformation, clipping and mapping in accordance with the method of the present invention.

In the drawing, like elements are designated with similar reference numbers, and identical elements in different specific embodiments are designated by identical reference numbers.

The embodiments now to be described implement a method for generating a curved figure, such as, a circle/ellipse, and for simplicity, the following description will be restricted to a circle/ellipse without implying limitation to the same, under transformation, clipping and mapping in a Graphics Workstation. For a 3D circle/ellipse under no transformation, clipping, and mapping; the method is covered by using a table (sin/cos) look-up.

To gain performance, the following objectives are achieved by the method according to the present invention:
- Transforming the circle/ellipse equation, rather than individual line segments.
- Implementing the Trivial Clipping for Circle to eliminate the clipping of individual segment.
- When the circle/ellipse is trivially accepted, the circle/ellipse equation can be mapped to the viewport, rather than mapping each individual line segment.

Summing up, for a circle/ellipse under panning/zooming, and the circle/ellipse is trivially accepted; then the drawing is done in the screen coordinates, without the distortion of the transformation shift factor and window to viewport mapping ratios.

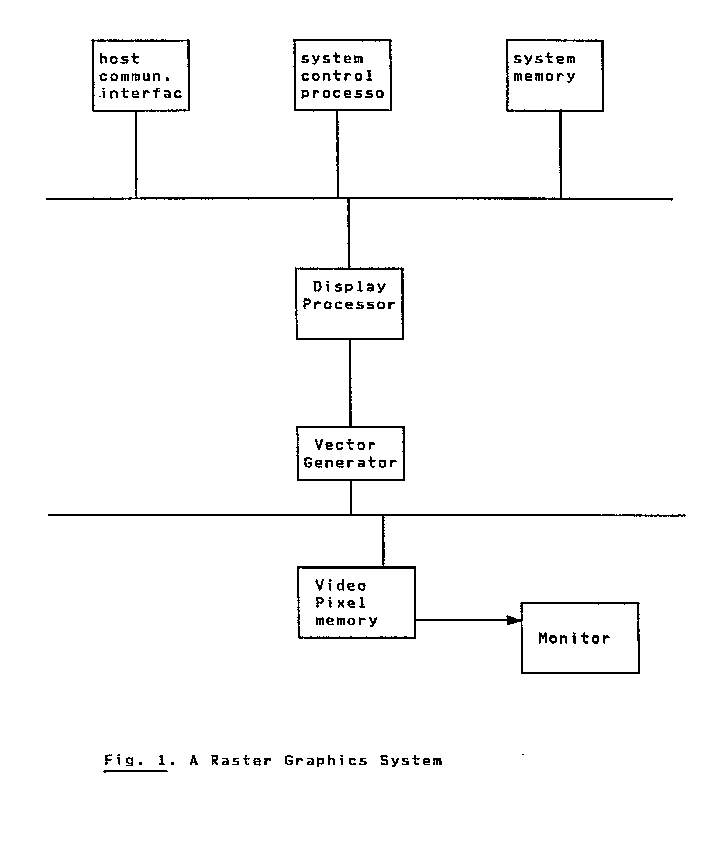

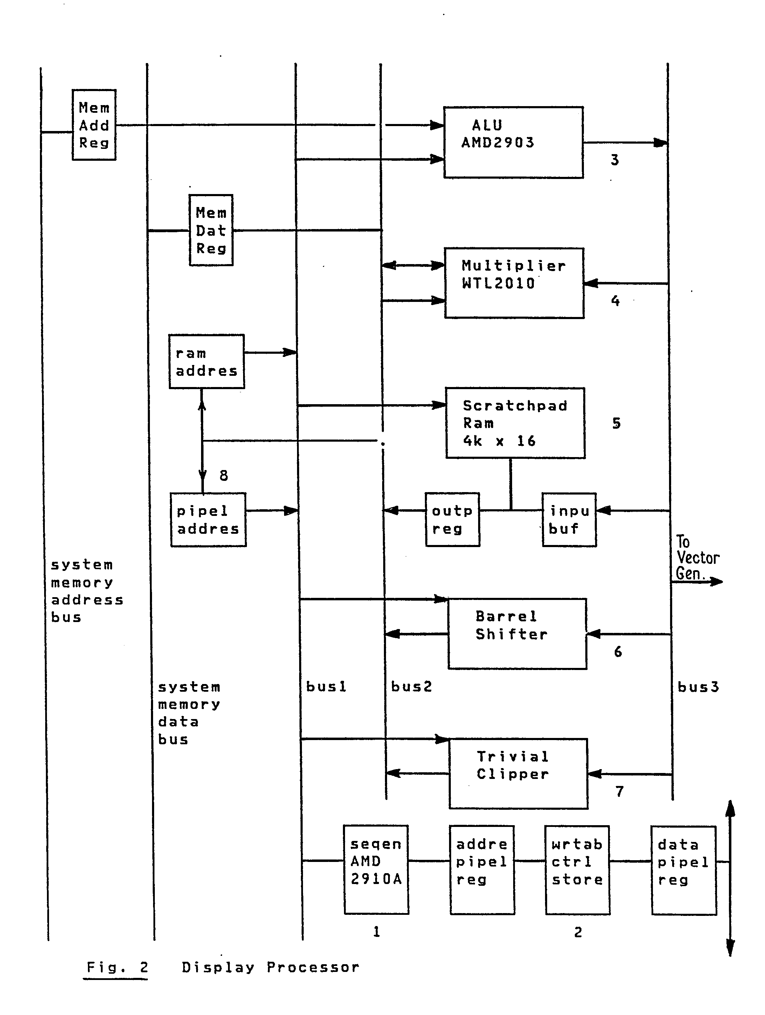

Referring now to Figs. 1 and 2, a graphics display system and a display processor for performing the method according to the present invention will be described. Geometric primitives, such as vectors (lines), markers, or polygons (or equivalently, the vertices of polygons) go through the transformation-clipping-mapping process. A circle is also treated as a geometric primitive and the Transformation-Clipping-Mapping Process for the circle is covered below. The same procedure also applies to an ellipse, a circular arcs, and an elliptical arcs.

A Raster Graphics System, see Fig. 1, consists of the following major components:
    1. System Control Processor
    2. Host Communication Interface Processor
    3. Display Processor
    4. Hardware Rasteriser - Vector Generator
    5. Hardware Character Generator
    6. Video Pixel Memory
    7. System Memory :eol.

Each of the major components to be described may be implemented by elements of commercially available display systems such as the IBM 5080.

1. System Control Processor
    - The System Control Processor is a general purpose processor that has master control of the System. The System Control Processor is responsible for servicing all attached Graphics I/O devices
    - It coordinates the associated processing with the Display Processor
    - the System Control Processor interfaces with the host via the Host Communication Interface

2. Host Communication Interface Processor
    - The Host Communication Interface Processor provides the serial interface of the System to the host.

3. Display Processor
    The Display Processor is responsible for executing graphics orders in the Display Storage Program, residing in the system memory and is concerned mainly with the generation of the image that will appear on the Display Monitor. It has the following functions:
    - Decoding graphics orders and executing non-drawing orders; e.g. book keeping and control.
    - Performing the transformation and clipping function to the geometric primitives: lines, characters, polygons, etc.
    - Preparing the following geometric objects for display: lines, characters, markers, filled polygons, by preprocessing and feeding the data to the Vector Generator and the Video Pixel Memory.

4. Hardware Rasteriser - Vector Generator
    The Vector Generator is a hardware implementation of the Bresenham Line Generating algorithm, which takes the end points of a vector (line) as input, and generates pixels in the Video Pixel Memory as output for display.

5. Video Pixel Memory
    The Video Pixel Memory consists of 8 1k by 1k bit planes, which supports 256 colours simultaneously via colour look-up tables. The image stored here will be displayed on the Monitor.

Transformation, Clipping, Mapping Process
    Each geometric primitive - vectors, programmable character strokes, and fixed characters undergo the transformation, clipping, mapping process.
        1. The first stage is the transformation in the world coordinate space. This might be a rotation, translation, scaling, shearing, or a combination of these; and is given by matrix multiplication.
        2. The second stage is clipping against the clipping box.
        3. The last stage is mapping the clipped data to the viewport in the screen.
    Using the IBM 5080 as an example, the world coordinate space is a 16-bit space (-32k to 32k in x, y, z direction). The Clipping Box is a rectangular box in the world coordinate space. The resolution of the screen is 10-bit space (1k × 1k in x and y); and the viewport is a rectangle on the screen with sides parallel to the x and y axis.
    Using a vector (line) as an example, the three stages are:
        1. transformation - of the end points of a vector, which is in the 16-bit fixed number format, the matrix multiplication is done in the (-32k,32k-1), 16-bit x,y,and z space.

2. clipping - using the two end points of a vector (line) and clip to the clipping box specified by the user discarding the portion of the line outside of the clipping box. The computation is done in 16-bit space

3. mapping - maps the contents inside the clipping box (in 3D) or clipping window (in 2D) to a viewport on the screen specified by the user. The screen coordinate is (0,4k-1) by (0,4k-1), which then mapped to the 1k by 1k screen.

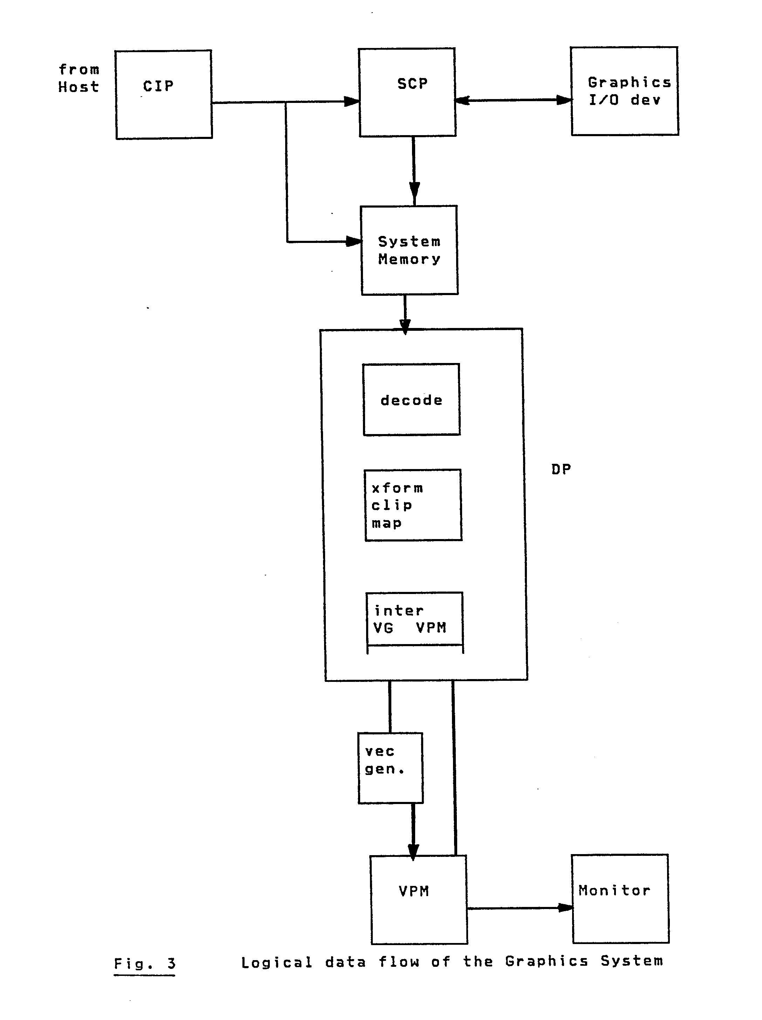

The Logical Data Flow (Fig. 3)

1. The Application Program is loaded from the host via the Host Communication Interface to the System Memory

2. The System Control Processor preprocesses the data (depending on the work required), then interrupts the Display Processor

3. The Display Processor then processes the data

4. The data is then passed to the Video Pixel Memory for display directly or via the Vector Generator

Display Processor

The Display Processor is a microprogrammed system. It fetches the data from the memory and sends the data out to the raster display via the Vector Generator, which is a rasteriser. It takes the line segment end points coordinates as input, and generates pixels in the video pixel memory. The main ingredients of the system (see Fig. 2) are:

1. sequencer, e.g. AMD2910A
2. 72-bit wide writable control store
3. 16-bit ALU, e.g. 4 bit-slice AMD2903
4. $16 \times 16$ multiplier with 32-bit accumulator, e.g. WTL2010
5. 32-bit barrel shifter
6. clipper (for checking trivial accept/reject)
7. $4k \times 16$ scratch ram
8. logic for microcode next address coming from the content of scratchpad ram registers - indexed addressing.
9. $1k \times 16$ table for sin/cos

The microprogram is stored in the writable control store.

Circle/Ellipse Generation

This section covers the generation of Circle/Ellipse in a graphics display, where the circle/ellipse does not undergo the procedure of transformation, clipping, and mapping. The parametric Ellipse equations are:

$$x = x1^*cosT + x2^*sinT + x0$$
$$y = y1^*cosT + y2^*sinT + y0$$
$$z = z1^*cosT + z2^*sinT + z0$$

and for a Circle with center at (x0,y0,z0) and radius r:

$$x = r^*cosT + x0$$
$$y = r^*sinT + y0$$
$$z = z0$$

By using the symmetry and the basic trigonometry equation:

$$sinT = sin(180°-T) = cos(90°-T)$$

and the corresponding equalities, it is possible to obtain the complete ranges of sin/cos by a $1025 \times 16$ table - the first quadrant values of sine function. The table look-up procedure is as follows:

1. Determine the quadrant to which the given angle T belongs
2. Use the following to determine the sign

| quadrant | sinT | cosT |
|---|---|---|
| 1st | sinT | sin(1024-T) |
| 2nd | sin(2048-T) | -sin(T-1024) |
| 3rd | -sin(T-2048) | -sin(3072-T) |
| 4th | -sin(4096-T) | sin(T-3072) |

Circle Generation

A 2D Circle is defined by its center (xc, yc) and its radius r . The consecutive points (xc + rcosT, yc + rsinT) are generated as a line segment, where T ranges from 0 to 4095. To improve performance, T is taken to be a set of numbers which give an acceptable (to the eyes) appearance of a circle. For example, if r is small, say 12, T could be taken to be 0, 256, 512, 768, 1024, etc . The formula for the points is rewriten as

(xc + rcos(nS), yc + rsin(nS))

where S is a factor of 1024, and n = 1024/S. The circle consists of n line segments,i.e., chords. In this context, the following is a program for circle generation in the first quadrant:

```
set counter = n = 1024/S
set tabptr1 = 0 + table base address
set tabptr2 = 1024 + table base address

IF n > 0,

output (xc + r*contents(tabptr2), yc + r*contents(tabptr1))
counter = counter - 1
tabptr1 = tabptr1 + S
tabptr2 = tabptr2 - S

ELSE END
```

(The other three quadrants can be handled correspondingly and ellipses can be handled in a similar manner.)

Microprogram Implementation in Display Processor

In the Display Processor shown in Figure 2,
    1. The 1k SIN/COS table is contained in the 4k × 16 Scratchpad ram (5);
    2. The multiplier can take two operands as input simultaneously (4) from bus2 and bus3, its output can then be read out 16-bit at a time in 2 cycles;
    3. The radius r is stored in a AMD2903 register - RADIUS (3);
    4. The Counter n is stored in another AMD2903 register - COUNTER
    5. The AMD2910 instruction RPCT is used for the loop control (1) - the 2910 counter is loaded with (1024/S - 1)initially;
    6. The ram address register RAR (9) (addressing the scratch pad ram) is used to address the SIN/COS table;
    7. The two pointers - tabptr1 and tabptr2 are in two AMD2903 registers;
Therefore, the above procedure can be implemented as follows:
    1. load (1024/S - 1) into AMD2910 counter;
    2. load radius to 2903 register RADIUS;
    3. load 2903 register tabptr1 with table base address;
    4. load 2903 register tabptr2 with table base address + 1024;

5. use AMD2910 instruction RPCT for loop control

6. load tabptr1 to RAR via bus2, and post-increment tabptr1 by S;

7. load RADIUS and the content of scratch ram with address in RAR to the multiplier;

8. read out the most significant parts of the multiplier output, and add xc to it to get the x-coordinate;

9. load tabptr2 to RAR via bus2, and post-decrement tabptr1 by S;

10. load RADIUS and the content of scratch ram with address in RAR to the multiplier;

11. read out the most significant parts of the multiplier output, and add yc to it to get the y-coordinate.

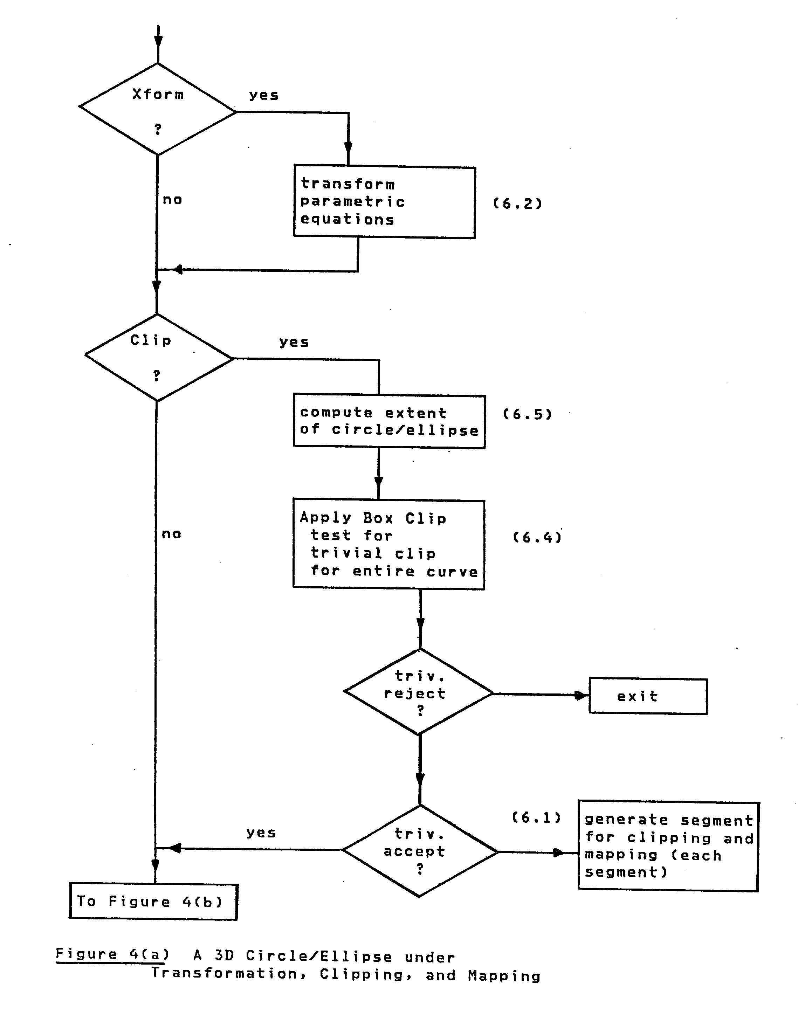

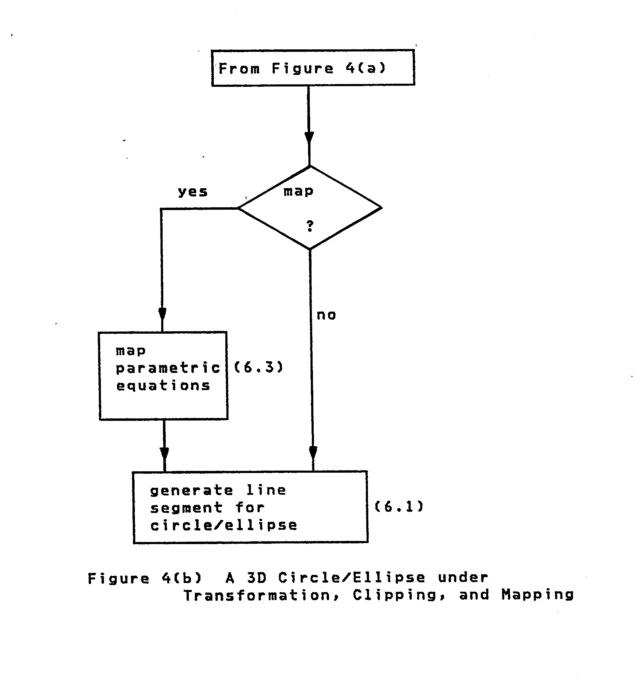

Referring now to Fig. 4, generation of Circles/Ellipse under transformation, clipping and mapping will be described.

A test is made to determine whether the figure to be drawn is to be transformed. If it is, a branch is taken to the routine for transforming parametric equations as described below. If no transformation is to be performed, a next test is performed to determine if clipping is to be performed against some clipping box. If so, the extent of the closed figure to be drawn and clipped is computed as described below and the box clip test for trivial clipping for the entire figure is employed.

If the box clip test for trivial clipping indicates that the entire figure is outside the clipping box, then the process is ended since there is nothing to be drawn.

If the figure is not rejected by the trivial clip test a trivial accept test is performed to see if the entire figure to be drawn is within the clip box.

If the figure is not within the clip box entirely, some clipping will be required for line segments that cross clip box boundary planes. The routine for generating segments for clipping and mapping is described below.

If clipping is not to be performed or if a trivial accept signal is generated indicating that the figure is totally within the clipping box, mapping to the viewport on the display screen is checked.

If the figure is to be mapped then the mapping of parametric equations routine as described below will be executed and then the line segment for the close figure to be drawn will be generated.

If mapping is not to be performed, the line segment for the closed curved figure to be drawn will be generated directly without mapping parametric equations.

Each of the subroutines referred to in the flow diagram of Fig. 4, will be described in greater detail in the discussion that follows.

Transformation, Clipping, Mapping Process

Each geometric primitive - vectors, programmable character strokes, and fixed characters undergo the transformation, clipping, mapping process.

The 3 stages are:

1. transformation in the world coordinate space;

2. clipping against the clipping window; and

3. mapping the clipped data to the viewport in the screen.

The world coordinate space is a 16-bit space (-32k to 32k in x, y, z direction) and the resolution of the screen is 10-bit space (1k × 1k in x and y).

Eliminate the Transformation

By using

1. a sin/cos table;

2. a multiplier; and

3. the following concept of transforming the circle/ellipse equation;

the step of transformation of segments can be eliminated.

Transform the Parametric Equation for an Ellipse Consider the following ellipse:

$$x = f1^*cosT + f2^*sinT + f0$$
$$y = d1^*cosT + d2^*sinT + d0$$
$$z = e1^*cosT + e2^*sinT + e0$$

Let

$$P0 = (f0,d0,e0)$$
$$P1 = (f1+f0,d1+d0,e1+e0)$$
$$P2 = (f2+f0,d2+d0,e2+e0)$$

Transform

$$P0 \rightarrow Q0 = (x0,y0,z0)$$
$$P1 \rightarrow Q1 = (a1,b1,c1)$$
$$P2 \rightarrow Q2 = (a2,b2,c2)$$
$$(x1,y1,z1) = (a1-a0,b1-b0,c1-c0)$$
$$(x2,y2,z2) = (a2-a0,b2-b0,c2-c0)$$

Construct the segment from the following equations by using a sin/cos table.

$$x = x1^*cosT + x2^*sinT + x0$$
$$y = y1^*cosT + y2^*sinT + y0$$

```
z = z1*cosT + z2*sinT + z0
clip each line segment;(")
map each line segment.(")
```

Transform the Parametric Equation for a Circle
( A 2D Circle is a special case of ellipse.)
Let P0 = (f0,d0,e0) denote the center of the circle and r the radius.
The equation is

```
x = r*cosT + f0
y = r*sinT + f1
z = f2 :p.
```

Trivial Clipping
The objective here is to trivially accept or reject a whole circle/ellipse without clipping each individual line segments and the (x,y,z)-extent of the circle/ellipse is used.

Extent of the Circle/Ellipse
Each component of the equation is of the form:

```
f(T) = U*cosT + V*sinT
```

To find its maximum, consider its derivative

```
f'(T) = -U*sinT + V*cosT
```

The extreme - maxima or minima exists at

```
f'(T) = 0
```

which is

```
tanT = V/U
```

```
cosT =   U/sqrt(U**2 + V**2)
```

```
          or -U/sqrt(U**2 + V**2)
```

```
sinT =   V/sqrt(U**2 + V**2)
```

```
          or -V/sqrt(U**2 + V**2)
```

The bound for f(T) is therefore

```
sqrt(U**2 + V**2)
```

From the Circle/Ellipse Equation in the previous section, the Circle/Ellipse is bounded by the following boundaries

```
x = x0 - sqrt(x1**2 + x2**2) left
x = x0 + sqrt(x1**2 + x2**2) right
y = y0 - sqrt(y1**2 + y2**2) bottom
y = y0 + sqrt(y1**2 + y2**2) top
z = z0 - sqrt(z1**2 + z2**2) near
z = z0 + sqrt(z1**2 + z2**2) far
```

7

For a Circle, the parameters become

x = x0 - r  left
x = x0 + r  right
y = y0 - r  bottom
y = y0 + r  top
z = z0  near
z = z0  far

A check to determine whether the box defined by the above boundary parameters is entirely inside the clipping box. If it is, the Circle/Ellipse equation is mapped to the screen to draw it (see the next section). Otherwise, individual line segments are generated and passed to the clipping routine.

Window To Viewport Mapping for Trivially Accepted Circle/Ellipse
(For <u>Trivially Accepted</u> Circles, the same approach is used as in the first section - transformation to map the circle/ellipse equation, rather than individual line segments to the screen.)

Window to Viewport Mapping (general case)
The (x,y) clipping window is given by

x = xw1  left
x = xw2  right
y = yw1  bottom
y = yw2  top

The (x,y) viewport is given by

x = xv1  left
x = xv2  right
y = yv1  bottom
y = yv2  top
let xratio = (xv2-xv1)/(xw2-xw1)
yratio = (yv2-yv1)/(yw2-yw1)

The window to viewport mapping is given by

x → (x-xw1)*xratio + xv1
y → (y-yw1)*yratio + yv1
xratio = xnum * (2**xexp)
xratio = ynum * (2**yexp)

Mapping the Circle/Ellipse Equation
At this stage, the equations are

x = x1*cosT + x2*sinT + x0
y = y1*cosT + y2*sinT + y0

with the following mapping

x0 → (x0-xw1)*xratio + xv1 = C1
y0 → (y0-yw1)*yratio + yv1 = C2
x1 → x1*xratio = U1
x2 → x2*xratio = U2
y1 → y1*yratio = V1
y2 → y2*yratio = V2

The equations become

x = U1*cosT + U2*sinT + C1
y = V1*cosT + V2*sinT + C2

The table (sin/cos) look-up method is applied to draw the Circle/Ellipse.

Draw-Ellipse Method

An Ellipse is given by the following set of equations:

$$x = x1^*cosT + x2^*sinT + x0$$
$$y = y1^*cosT + y2^*sinT + y0$$
$$z = z1^*cosT + z2^*sinT + z0$$

To improve the performance, T may be taken to be a set of numbers which are multiples of a number S, itself a factor of 1024. For example, for a circle with radius 12, S = 256 and T = 0, 256, 512, 768, 1024, etc.

The formula for the points is rewritten as

$$(xc + rcos(nS), yc + rsin(nS))$$
$$n = 1024/S.$$

S is determined by the size of the circle/ellipse and the circle consists of n line segments - chords.

Draw-Ellipse (1st quadrant)

```
Parameters:        S              /* a factor of 1024  */

                   x0,y0,z0       /* coefficients  */

                   x1,y1,z1       /* of the  */

                   x2,y2,z2       /* ellipse equation  */

Variables:         counter        /* # of segments  */

                   T

                   ptr1           /* pointer to the sin/cos table  */

                   ptr2           /* pointer to the sin/cos table  */

                   base           /* table base address  */
```

9

```
                                          /* first quadrant  */


                                          /* (cosT,sinT)  */


        counter    <-- 1024/S


        ptr1       <--  base


        ptr2       <--  1024 + base


IF n > 0


        output         x = x0 + x1*(ptr2->) + x2*(ptr1->);


                       y = y0 + y1*(ptr2->) + y2*(ptr1->);


                       z = z0 + z1*(ptr2->) + z2*(ptr1->);


        counter    <-- counter - 1


        ptr1       <--  ptr1 + S


        ptr2       <--  ptr2 - S


ELSE END


                                          /* second quadrant  */


                                          /* (-sinT,cosT)  */
```

10

```
        counter      <-- 1024/S

        ptr1         <--  base

        ptr2         <--  1024 + base

IF n > 0

        output          x = x0 - x1*(ptr1->) + x2*(ptr2->);

                        y = y0 - y1*(ptr1->) + y2*(ptr2->);

                        z = z0 - z1*(ptr1->) + z2*(ptr2->);

        counter      <-- counter - 1

        ptr1         <--  ptr1 + S

        ptr2         <--  ptr2 - S

ELSE END

                                        /* third  quadrant  */

                                        /* (-cosT,-sinT)  */

        counter      <-- 1024/S

        ptr1         <--  base

        ptr2         <--  1024 + base
```

```
IF n > 0

        output          x = x0 - x1*(ptr2->) - x2*(ptr1->);

                        y = y0 - y1*(ptr2->) - y2*(ptr1->);

                        z = z0 - z1*(ptr2->) - z2*(ptr1->);


        counter    <-- counter - 1

        ptr1       <--  ptr1 + S

        ptr2       <--  ptr2 - S


ELSE END

                                        /* fourth quadrant  */

                                        /* (sinT,-cosT)   */


        counter    <-- 1024/S

        ptr1       <--  base

        ptr2       <--  1024 + base


IF n > 0

        output          x = x0 + x1*(ptr1->) - x2*(ptr2->);

                        y = y0 + y1*(ptr1->) - y2*(ptr2->);
```

0 232 005

```
z = z0 + z1*(ptr1->) - z2*(ptr2->);


counter    <-- counter - 1


ptr1       <--  ptr1 + S


ptr2       <--  ptr2 - S



ELSE END.
```

Subroutine for Transforming the Equation

This procedure transforms the parameters of a Circle/Ellipse equation to yield a new equation by transforming the following matrix

```
x = f1*cosT + f2*sinT + f0
y = d1*cosT + d2*sinT + d0
z = e1*cosT + e2*sinT + e0
into
x = x1*cosT + x2*sinT + x0
y = y1*cosT + y2*sinT + y0
z = z1*cosT + z2*sinT + z0
```

13

Procedure Transform-equation

```
        Input :        f0, d0, e0     /* parameters of a  */

                       f1, d1, e1     /* circle/ellipse  */

                       f2, d2, e2     /* equation  */


        Output:        x0, y0, z0     /* parameters of a  */

                       x1, y1, z1     /* circle/ellipse  */

                       x2, y2, z2     /* equation  */



        Constants:     m11,m12,m13,   /* transformation matrix M  */

                       m21,m22,m23,

                       m31,m32,m33,

                       ...........,

                       m41,m42,m43,

                       sfactor        /* shift factor of 5080 matrix  */

                       exponent       /* exponent = 2**sfactor  */


   x0    <-- (m11*c0 + m21*d0 + m31*e0)*exponent + m41
```

```
y0    <-- (m12*c0 + m22*d0 + m32*e0)*exponent + m42

z0    <-- (m13*c0 + m23*d0 + m33*e0 *exponent + m43

x1    <-- (m11*c1 + m21*d1 + m31*e1)*exponent

y1    <-- (m12*c1 + m22*d1 + m32*e1)*exponent

z1    <-- (m13*c1 + m23*d1 + m33*e1 *exponent

x2    <-- (m11*c2 + m21*d2 + m31*e2)*exponent

y2    <-- (m12*c2 + m22*d2 + m32*e2)*exponent

z2    <-- (m13*c2 + m23*d2 + m33*e2 *exponent


END                              /* end transforming-equation  */
```

Mapping the Equation (under window to viewport mapping)
The window to viewport mapping is given by

$$x \rightarrow (x\text{-}xw1)*(xv2\text{-}xv1)/(xw2\text{-}xw1) + xv1$$
$$y \rightarrow (y\text{-}yw1)*(yv2\text{-}yv1)/(yw2\text{-}yw1) + yv1$$

The Circle/Ellipse equation
$$x = x1*cosT + x2*sinT + x0$$
$$y = y1*cosT + y2*sinT + y0$$
$$z = z1*cosT + z2*sinT + z0$$
is mapped to
$$x = U1*cosT + U2*sinT + C1$$
$$y = V1*cosT + V2*sinT + C2$$

Procedure Map-equation

```
Input:          x0, y0, z0     /* parameters of a  */

                x1, y1, z1     /* circle/ellipse  */

                x2, y2, z2     /* equation  */


Output:         C1, C2         /* parameters of a mapped  */

                U1, U2         /* circle/ellipse  */

                V1, V2         /* equation  */


Constants:      xw1            /* left clipping window  */

                xw2            /* right clipping window  */

                ywl            /* bottom clipping window  */
```

```
Input:          x0, y0, z0     /* parameters of a  */
```

```
         yw2                /* top clipping window  */

         xv1                /* left viewport boundary  */

         xv2                /* right viewport boundary  */

         yv1                /* bottom viewport boundary  */

         yv2                /* top viewport boundary  */


xratio =  (xv2-xv1)/(xw2-xw1)


yratio =  (yv2-yv1)/(yw2-yw1)


xratio  =  xnum * (2**xexp)


yratio  =  ynum * (2**yexp)


         xnum               /* fractional part of xratio  */

         ynum               /* fractional part of yratio  */

         xexp               /* exponent part of xratio  */

         yexp               /* exponent part of yratio  */


C1    <-- (x0-xw1)*xnum*(2**xexp) + xv1


C2    <-- (y0-yw1)*ynum*(2**yexp) + yv1


U1    <-- x1*xnum*(2**xexp)
```

```
U2    <-- x2*xnum*(2**xexp)


V1    <-- y1*ynum*(2**yexp)


V2    <-- y2*ynum*(2**yexp)


END                             /* end of mapping of equation  */
```

Subroutine Clipbox
   The following is the Clipbox subroutine used above.
   (In Procedure Clipbox The clipping box boundaries are
   x = xw1  left
   x = xw2  right
   y = yw1  bottom
   y = yw2  top
   z = zw1  near
   z = zw2  far
   The extent of the box containing the object to be tested is
   x = xa  left
   x = xb  right
   y = ya  bottom
   y = yb  top
   z = za  near
   z = zb  far
   Flags are set depending on the relative positions of the two boxes. If the test box is inside the clipping box then the accept-flag is set. If the test box is completely outside the box, then the reject-flag is set. Otherwise, the clip-flag is set.)

Procedure Clipbox

```
Input:          xa              /* left  */


                xb              /* right  */


                ya              /* bottom  */


                yb              /* top  */


                za              /* near  */


                zb              /* far  */
```

```
Output:         inside-flag

                outside-flag

                clip-flag


Constants:      xw1             /* left clipping window   */

                xw2             /* right clipping window   */

                yw1             /* bottom clipping window  */

                yw2             /* top clipping window  */

                zw1             /* near clipping window  */

                zw2             /* far clipping window  */


    inside-flag  <--  0;

    outside-flag <--  0;

    clip-flag    <--  0;

IF xw2 - xa < 0

        GOTO            OUTSIDE;

IF xb - xw1 < 0

        GOTO            OUTSIDE;
```

```
IF yw2 - ya < 0

            GOTO            OUTSIDE;

IF yb - yw1 < 0

        GOTO            OUTSIDE;

IF zw2 - za < 0

        GOTO            OUTSIDE;

IF zb - zw1 < 0

        GOTO            OUTSIDE;

IF xw1 - xa < 0

        GOTO            INTERSECT;

IF xb - xw2 < 0

        GOTO            INTERSECT;

IF yw1 - ya < 0

        GOTO            INTERSECT;

IF yb - yw2 < 0
```

```
         GOTO                  INTERSECT;


IF zw1 - za < 0



         GOTO                  INTERSECT;



IF zb - zw2 < 0



         GOTO                  INTERSECT;



IFinside-flag <-- 1;



     return to calling program;



                 OUTSIDE :   IF outside-flag <-- 1;



                         return to calling program;



                 INTERSECT : IF clip-flag <-- 1;



                         return to calling program;
```

Computing Extent of the Circle/Ellipse
The following computes the extent of the circle/ellipse given in terms of the following equation which is for an ellipse:

$x = x1^{*}cosT + x2^{*}sinT + x0$
$y = y1^{*}cosT + y2^{*}sinT + y0$
$z = z1^{*}cosT + z2^{*}sinT + z0$

The extent of the box containing the ellipse to be used in the Clipbox procedure is
$x = xa$  left
$x = xb$  right
$y = ya$  bottom
$y = yb$  top
$z = za$  near
$z = zb$  far

Procedure Compute-extent

```
Input:          x0, y0, z0      /* parameters of a  */

                x1, y1, z1      /* circle/ellipse  */

                x2, y2, z2      /* equation  */

Output:         xa              /* left  */

                xb              /* right  */

                ya              /* bottom  */

                yb              /* top  */

                za              /* near  */

                zb              /* far  */


xa = x0 - sqrt(x1**2 + x2**2)

xb = x0 + sqrt(x1**2 + x2**2)

ya = y0 - sqrt(y1**2 + y2**2)

yb = y0 + sqrt(y1**2 + y2**2)

za = z0 - sqrt(z1**2 + z2**2)

zb = z0 + sqrt(z1**2 + z2**2)


END                     /* end of procedure Compute-extent  */
```

Thus, while the invention has been described with reference to preferred embodiments thereof, it will be understood by those skilled in the art that various changes in form and details may be made without departing from the scope of the appended claims.

## Claims

1. A method for drawing a curve or a curved figure on a display device under potential transformation, clipping, or mapping, comprising the steps of:
testing to determine whether transformation is to be performed;
transforming parametric equations for the figure to be transformed and drawn;
testing to determine whether the figure to be drawn is to be clipped against one or more clipping boundaries;
computing an extent of the figure to be drawn;
mapping the parametric equations if mapping is required;
generating line segments for the figure to be drawn.
2. A method as claimed in claim 1, further comprising the steps of:
applying a box clip test for trivial clipping for the entire figure;
rejecting those figures which are entirely outside the viewport as determined by the trivial clipping test;
accepting the entire figure to be drawn which has been determined to be completely within the clipping box.
3. A method as claimed in claim 1, wherein said curved figure is closed.
4. A method as claimed in claim 3, wherein said closed curved figure is a circle.
5. A method as claimed in claim 3, wherein said closed curved figure is an ellipse.

Fig. 1. A Raster Graphics System

0232005

Fig. 2   Display Processor

Fig. 3    Logical data flow of the Graphics System

0232005

Figure 4(a)  A 3D Circle/Ellipse under
            Transformation, Clipping, and Mapping

Figure 4(b)  A 3D Circle/Ellipse under
            Transformation, Clipping, and Mapping